Europäisches Patentamt

European Patent Office

Office européen des brevets

(19)

(11) Veröffentlichungsnummer : **0 101 969**
**B1**

(12) **EUROPÄISCHE PATENTSCHRIFT**

(45) Veröffentlichungstag der Patentschrift :
30.10.85

(21) Anmeldenummer : 83107583.3

(22) Anmeldetag : 02.08.83

(51) Int. Cl.⁴ : **F 02 F 1/38, F 02 B 23/08**

(54) Zylinderkopf für Viertakt-Brennkraftmaschinen.

(30) Priorität : 10.08.82 DE 3229723

(43) Veröffentlichungstag der Anmeldung :
07.03.84 Patentblatt 84/10

(45) Bekanntmachung des Hinweises auf die Patenterteilung : 30.10.85 Patentblatt 85/44

(84) Benannte Vertragsstaaten :
**AT DE FR GB IT SE**

(56) Entgegenhaltungen :
**DE-A- 2 919 213**
**DE-B- 1 295 270**
**DE-C- 874 847**
**US-A- 4 142 501**

(73) Patentinhaber : **BAYERISCHE MOTOREN WERKE
Aktiengesellschaft
Postfach 40 02 40 Petuelring 130
D-8000 München 40 (DE)**

(72) Erfinder : **Seidl, Jiri, Dipl.-Ing.
Strassbergerstrasse 14
D-8000 München 40 (DE)**

(74) Vertreter : **Schweiger, Erwin
c/o Bayerische Motoren Werke AG - AJ-35 Postfach
40 02 40 Petuelring 130
D-8000 München 40 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Beschreibung

Die Erfindung betrifft einen Zylinderkopf für Viertakt-Brennkraftmaschinen gemäß der Bauart des Patentanspruches 1.

Bei einem bekannten Zylinderkopf dieser Bauart gemäß SAE-Bericht 710 148 ist der V-Winkel der Ventile symmetrisch zur zugehörigen Zylinderachse angeordnet. Die Ventile sind relativ tief versenkt im Brennraumanteil des Zylinderkopfes angeordnet. Um u. a. in Verbindung mit einem flachen Kolbenboden eine ausreichend hohe Verdichtung zu ermöglichen, sind querab zu den Ventilen und zwischen Zündkerze und Projektion der Zylinderbohrung relativ großflächige Quetschspalte angeordnet. Diese Quetschspalte erzeugen zwar am Ende des Verdichtungshubes eine starke Verwirbelung der Ladung, die das Durchbrennen der Ladung begünstigt, jedoch behindern die Quetschspalte den Fortschritt der Flammenfront in ihrem eigenen Bereich. Dadurch besteht die Gefahr, daß einerseits Restanteile der Ladung unverbrannt bleiben und daß andererseits Selbstzündung eintritt.

Aufgabe der Erfindung ist es, einen Zylinderkopf der eingangs beschriebenen Bauart so weiterzubilden, daß dessen Vorteile bezüglich Bauaufwand und Bauraum erhalten bleiben, jedoch die Nachteile im Verbrennungsablauf vermieden werden und insbesondere ein geringes Volumen des Brennraumanteiles für eine hohe Verdichtung im Zusammenwirken mit einem flachen Kolben oder einem flachen Brennraumanteil im Kolben erreicht wird.

Diese Aufgabe löst die Erfindung mit den kennzeichnenden Merkmalen des Patentanspruches 1. Durch die Anordnung der heißen Bauteile, nämlich Auslaßventil und Zündkerze, im relativ hohen Teil des Brennraumes mit hohem Volumenanteil werden die dort erhitzten Ladungsanteile als erstes gezündet und verbrannt, während die von der Funkenstrecke der Zündkerze entfernt angeordneten Ladungsteile mit geringem Volumenanteil von den dort befindlichen relativ kühlen Bauteilen, nämlich Einlaßventil und benachbarte Brennraumwandung, weniger erhitzt und dadurch ohne die Gefahr einer vorzeitigen Selbstzündung von der Flammenfront erfaßt und gezündet werden. Die gleichen Vorteile ergeben sich sowohl bei einer nur im Zylinderkopf ausgebildeten Brennraumform mit Halb-Stromlinien-Querschnitt als auch bei einer zusätzlichen flachen Mulde im Kolbenboden. Die Brennraumform nach der Erfindung entspricht zwar prinzipiell weitgehend einer rotationssymmetrischen Linsenform (Automotive Industries 7/81, S. 50), bei der jedoch die Anordnung der Zündkerze im Volumen-Zentrum des Brennraumes mit der größten Höhe desselben wegen der Ventilanordnung in einer gemeinsamen Ebene nicht verwirklichbar ist. Dabei weicht auch der V-Winkel der Ventile erheblich von demjenigen der Erfindung ab, wodurch der Bauaufwand für die Ventilsteuerung höher ist.

Bei einem weiteren bekannten Zylinderkopf (ATZ 68/2, S. 59-61) ist zwar der relativ kleine V-Winkel von knapp über 20° in Richtung zum Einlaßventil geschwenkt, jedoch sind dort die Ventile in einem relativ tiefen Brennraumanteil des Zylinderkopfes versenkt angeordnet und sowohl auf der Seite der Zündkerze als auch gegenüberliegend relativ große Quetschflächen vorgesehen sowie die erforderliche Verdichtung durch einen Aufsatz des Kolbens erreicht, der den haubenförmigen Brennraum zerklüftet. Der Verbrennungsablauf wird dadurch nachteilig beeinflußt.

Die Merkmale der Ansprüche 2 bis 4 ermöglichen eine Anordnung der Funkenstrecke der Zündkerze im räumlichen Brennraumzentrum bzw. im Zentrum des Hauptvolumens des erfindungsgemäß ausgebildeten Brennraums. Gemäß Versuchsergebnissen wird dadurch ein sehr gleichmäßiger Verbrennungsablauf sowohl innerhalb jedes einzelnen Zylinders als somit auch zwischen mehreren Zylindern mit aufeinander folgenden Arbeitstakten erreicht. Ein Teillastbetrieb mit sehr stark abgemagertem Kraftstoff-Luftgemisch und damit sehr geringem Kraftstoffverbrauch ist dadurch möglich.

Die Merkmale des Anspruches 5 ergeben einen Zylinderkopf für Reihen-Brennkraftmaschinen mit besonders funktions- und kostengünstiger Ausbildung der Ventilsteuerung bei zugleich für die Maschinenleistung vorteilhaft großer Ausbildung der Ventil-Öffnungsquerschnitte bis zum Rand der Brennraumanteile, wobei durch die vorgesehenen V- und Schwenk-Winkel ferner günstige Ladungswechselfunktionen infolge der möglichen Kanalanordnungen zu den Ventilen erreicht werden. Die Merkmale des Anspruches 6 ermöglichen eine kostengünstige Herstellung des Zylinderkopfes im einteiligen Druckguß.

Die Merkmale des Anspruches 7 bilden den Zylinderkopf nach der Erfindung konstruktiv weiter, und zwar bezüglich einer für die Füllung und Leistung der Brennkraftmaschine günstigen Ladungszuströmung durch den Einlaßkanal, eines für geringen Wärmeübergang vom Abgas in den Zylinderkopf vorteilhaft kurzen Auslaßkanals im Zylinderkopf und einer raumsparenden und kostengünstigen Anordnung von Kraftstoff-Einspritzdüsen, Hilfseinlaß- und/oder Abgasrückführ-Kanälen. Die Anordnung der Einlaßkanäle, der Kraftstoff-Einspritzdüsen sowie der Hilfseinlaß- und/oder Abgasrückführ-Kanäle hat ferner Einfluß auf den Verbrennungsablauf im Brennraum, da dadurch die Gemischbildung und Gemischverteilung und somit der Verbrennungsablauf im Brennraum maßgeblich mitbestimmt wird.

In der Zeichnung ist ein Ausführungsbeispiel der Erfindung dargestellt. Es zeigen :

Figur 1 eine vereinfachte Darstellung eines Zylinderkopfes für Viertakt-Brennkraftmaschinen im Bereich des Brennraumes im Querschnitt,

Figur 2 die Brennraum-Innenansicht des Zylinderkopfes nach Fig. 1 und

Figur 3 den Querschnitt eines vervollständigten Zylinderkopfes entsprechend den Fig. 1 und 2.

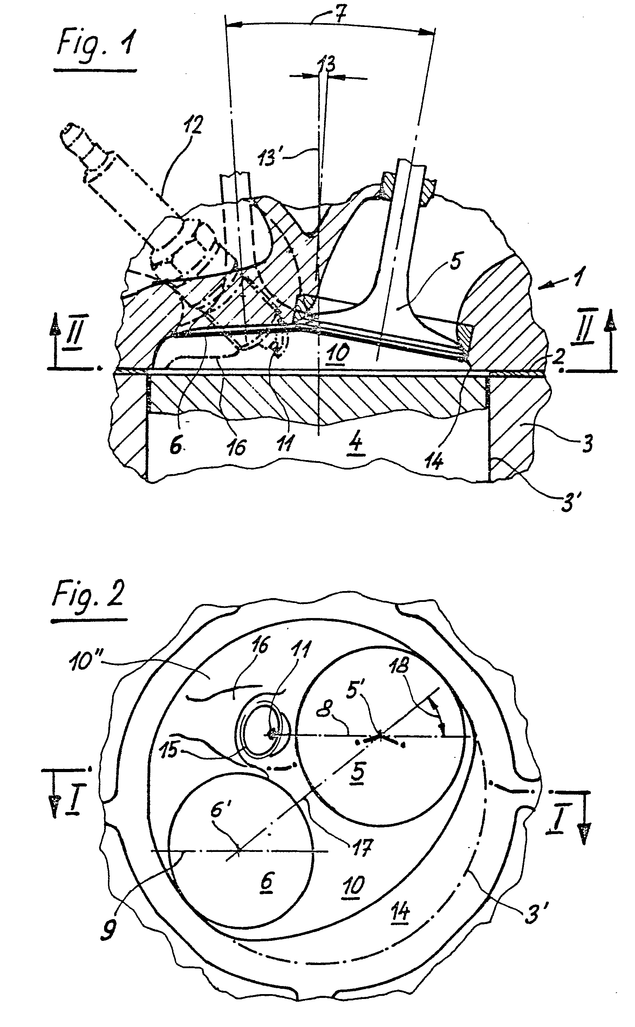

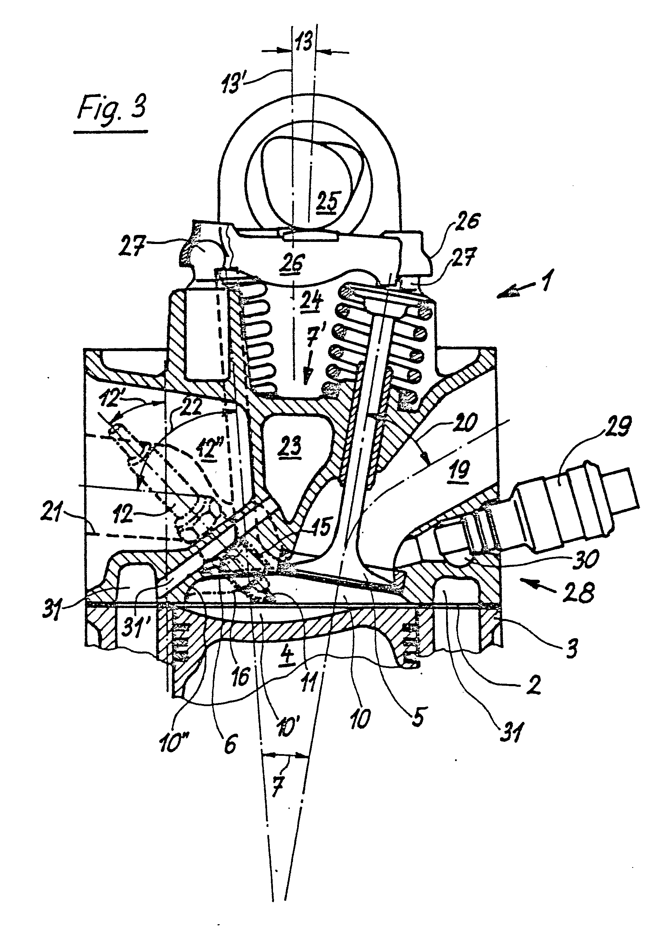

Ein Zylinderkopf 1 für eine Viertakt-Brennkraftmaschine schließt mit seiner Trennebene 2 an einen Zylinder 3 an, in dem ein Kolben 4 angeordnet ist. Im Zylinderkopf 1 sind je ein Einlaßventil 5 und ein Auslaßventil 6 mit einem V-Winkel 7 ihrer Schäfte angeordnet und quer zum V-Winkel 7 in parallelen Ebenen 8 und 9 versetzt angeordnet. Die Teller der Ein- und Auslaßventile 5 und 6 liegen vertieft in einer im Zylinderkopf 1 ausgeformten flach konkaven Brennraumwand 10. Der Kolben 4 ist in Fig. 1 ohne Brennraumanteil mit flachem Boden ausgebildet, kann jedoch gleichfalls eine flach-konkave Brennraumwand als Mulde 10' enthalten (Fig. 3).

Im Brennraum 10 im Zylinderkopf 1 ist annähernd in der Querebene 8 des Einlaßventiles 5 die Funkenstrecke 11 einer Zündkerze 12 angeordnet. Die Funkenstrecke 11 liegt in Richtung der Querebenen 8 und 9 gesehen, näher am Mittelpunkt 5' des Öffnungsquerschnittes des Einlaßventiles 5 als der Mittelpunkt 6' des Öffnungsquerschnittes des Auslaßventiles 6. Der V-Winkel 7 der Schäfte der Ein- und Auslaßventile 5 und 6 beträgt etwa 14° und ist in Richtung zum Einlaßventil 5 um einen Winkel 13 von etwa 3° geschwenkt. Durch diese Anordnung weist die Brennraumwand 10, in Richtung des V-Winkels 7 gesehen, gemäß Fig. 1 und 3 einen flachen, etwa tropfen- oder stromlinienförmigen Verlauf auf. Im Bereich des Auslaßventiles 6 und der Zündkerze 12 ist dieser Verlauf relativ hoch und verengt sich im Bereich des Einlaßventiles 5 und den benachbarten Bereichen flach-keilförmig bis zu einem entlang der Projektion der Bohrung 3' des Zylinders 3 teilweise umlaufenden Rand-Quetschspalt 14. Für die Befestigung der Zündkerze 12 mittels eines Zündkerzen-Gewindes 15 und für die räumliche Anordnung der Funkenstrecke 11 der Zündkerze 12 im Volumen-Zentrum des Brennraumes 10 weist die Brennraumwand 10 einen nach innen vorspringenden Wulst 16 auf.

Wie aus Fig. 2 ersichtlich, liegen die Mittelpunkte 5' und 6' der Ein- und Auslaßventile 5 und 6 bzw. der Ein- und Auslaß-Ventil-Öffnungsquerschnitte auf einer Verbindungslinie 17, die mit den Querebenen 8 und 9 einen relativ kleinen Winkel 18 von etwa 40° einschließt. Die Funkenstrecke 11 der Zündkerze 12 erhält dadurch eine Lage, die in Richtung der Querebenen 8 und 9 gesehen, näher am Mittelpunkt 5' des Einlaßventiles 5 liegt als der Mittelpunkt 6' des Auslaßventiles 6 und damit weitgehend im Zentrum des Brennraum-Volumens.

Wie aus Fig. 3 ersichtlich, schließen Einlaßkanal 19 und der Schaft des Einlaßventiles 5 einen relativ kleinen Winkel 20 von etwa 50° ein. Der Auslaßkanal 21 und der Schaft des Auslaßventiles 6 schließen dagegen einen relativ großen Winkel 22 von etwa 80° ein. Für den Einlaßkanal 19 ist damit eine günstige Anströmung des Tellers des Einlaßventiles 5, für den Auslaßkanal 21 dagegen eine relativ kurze Länge innerhalb des Zylinderkopfes 1 gegeben. Die Zündkerze 12 ist erheblich flacher als der Schaft des Auslaßventiles 6 angeordnet und zwar unter einem Winkel 12' von etwa 45°. Die Zündkerze 12 ist innerhalb einer nach außen offenen Zündkerzennische 12'' des Zylinderkopfes 1 in das Zündkerzengewinde 15 eingeschraubt. Im V-Winkel-Raum 7' zwischen den Schäften der Ein- und Auslaßventile 5 und 6 und zwischen den Ein- und Auslaßkanälen 19 und 21 sowie der Zündkerze 12 ist ein in Längsrichtung des Zylinderkopfes 1 hinterschneidungsfrei durchgehender Kühlkanal 23 angeordnet. Über dem Kühlkanal 23 schließt der Steuerraum 24 an, in dem die Nockenwelle 25 tunnelgelagert ist sowie entgegengesetzte Schlepphebel 26 auf Kugelstützlagern 27 gelagert sind und mit den Ein- und Auslaßventilen 5 und 6 in Antriebsverbindung stehen.

Im Winkelraum 28 zwischen der Trennebene 2 und den Einlaßkanälen 19 sind Kraftstoff-Einspritzdüsen 29 und Hilfseinlaß-Kanäle 30 sowie zur Trennebene 2 hin offene und mit dem Kühlkanal 23 verbundene Kühlnischen 31 angeordnet.

Neben dem sehr kostengünstig in einteiligem Druckguß ausführbaren Zylinderkopf 1 und der Ventilsteuerung mit einer einzigen Nockenwelle 25, Schlepphebeln 26 und Kugelstützlagern 27 ist eine sehr raum- und gewichtssparende Ausbildung des Gesamtaufbaues des Zylinderkopfes 1 gegeben. Mit dem geringen Kühlmittelinhalt des Kühlkanals 23 und der Kühlraumnischen 31 sowie deren Verbindungsbohrungen 31' ergibt die geringe Gesamtmasse des Zylinderkopfes 1 auch Vorteile für ein rasches Anwärmen nach dem Kaltstart der Maschine und somit für geringen Kraftstoffverbrauch. Dem gleichen Zweck dient die Gestaltung der Brennraumwand 10. Diese ist in den dargestellten Querschnitten im Zylinderkopf 1 als flache Tropfen- oder Stromlinienform ausgebildet. Als Begrenzung des relativ hohen Teiles der Form der Brennraumwand 10 sind die im Betrieb relativ heißen Teile, nämlich das Auslaßventil 6 und die Zündkerze 12 bzw. deren Funkenstrecke 11, angeordnet. Die Funkenstrecke 11 liegt dabei weitestgehend im Zentrum des Brennraum-Hauptvolumens. Die Zündung der Ladung erfolgt dadurch im räumlichen Zentrum des gesamten Brennraumvolumens, so daß sich die Flammenfront von der Stelle der Funkenstrecke 11 aus zunächst im Hauptvolumen ausbreiten und die dort vorhandenen relativ heißen Ladungsteile als erstes erfassen kann. Die relativ kalten Ladungsteile im relativ kalten Bereich des Einlaßventiles 5 und der benachbarten Teile einschließlich des Rand-Quetschspaltes 14 erreicht die Flammenfront zwar später, jedoch ist durch die relativ geringe Aufheizung der Ladung in diesem Bereich sowohl eine selbstzündungsfreie als auch eine weitestgehend rückstandsfreie Verbrennung gesichert. Diesen Bereich erreicht die Flammenfront dabei nämlich zuletzt, so daß der Kolben 4 zu diesem Zeitpunkt den Quetschspalt 14 bereits wieder erweitert und damit ein Durchbrennen der Ladung bis zum Brennraum-Rand bzw. bis zur Bohrung 3' des Zylinders 3 gewährleistet ist. Eine Mulde 10' im Boden des Kolbens 4 nach Fig. 3 dient dazu, das Verdichtungsverhältnis je nach Hubbemessung des Kolbens 4 auf eine bestimmte Bohrung 3' des Zylinders 3 und eine bestimmte Brennraumausbildung im Zylinderkopf 1 abzustimmen. Die Mulde 10' kann dabei, wie gezeigt, ausschließlich im Bereich um die Funkenstrecke 11 der Zündkerze 12 flach kugelkalottenförmig ausgebildet sein oder eine zur Brennraumwand 10 im Zylinderkopf 1 etwa symmetrische, ebenfalls etwa tropfen- oder stromlinienförmige Gestaltung aufweisen.

**Patentansprüche**

1. Zylinderkopf (1) für eine fremdgezündete 4-Takt-Brennkraftmaschine,
— mit einem überwiegend als konkave, flache Ausnehmung ausgebildeten Brennraum (10),
— mit je einem Ein- und Auslaß-Ventil (5, 6) je Brennraum (10), deren Schäfte in parallelen Querebenen angeordnet sind,
— wobei in der senkrechten Projektion zu den Querebenen die Schäfte einen V-Winkel (7) im Bereich von 10 bis 20° bilden, und
— mit einer Zündkerze (12), deren Funkenstrecke (11) nahe oder in der Querebene des Einlaßventils (5), in Einströmrichtung der in den Brennraum (10) angesaugten Ladung und nahe oder in der genannten Projektion des Auslaßventilschaftes angeordnet ist,
dadurch gekennzeichnet,
— daß in der genannten Projektion der Winkel zwischen Einlaßventilschaft und jeweils zugeordneter Zylinderachse im Bereich von 2 bis 10° größer ist als der entsprechende Winkel mit dem Auslaßventilschaft,
— daß ein sich bis zum jeweils zugeordneten Zylinderrand erstreckender, höherer Bereich der Ausnehmung das Auslaßventil (6) und die Funkenstrecke (11) enthält und
— daß ein glatt daran anschließender, sich allmählich verjüngender Bereich der Ausnehmung das Einlaßventil (5) enthält und bis auf die Zylinderkopf-Zylinder-Trennebene abfällt.

2. Zylinderkopf nach Anspruch 1, dadurch gekennzeichnet,
daß die Verbindungslinie (17) der Mittelpunkte (5' und 6') der Öffnungsquerschnitte der Ein- und Auslaßventile (5 und 6) mit den Querebenen (8 und 9) einen Winkel (18) im Bereich von 30 bis 50° einschließt.

3. Zylinderkopf nach Anspruch 2, dadurch gekennzeichnet,
daß die Funkenstrecke (11) der Zündkerze (12) in der genannten Projektion der Querebenen (8 und 9) näher am Mittelpunkt (5') des Öffnungsquerschnittes des Einlaßventiles (5) liegt als der Mittelpunkt (6') des Öffnungsquerschnittes des Auslaßventiles (6).

4. Zylinderkopf nach einem der Ansprüche 1 bis 3,
— wobei die Längsachse der Zündkerze (12) unter einem Winkel (12') zur Zylinder-Mittelachse

(13') im Bereich von 40 bis 50° angeordnet ist, dadurch gekennzeichnet,
— daß die Brennraumwand (10) im Bereich der Zündkerze (12) einen nach innen vorspringenden Wulst (16) aufweist,
— der sich nahe vom Rand der Brennraumwand (10) bis zum brennraumseitigen Ende des Zündkerzen-Gewindes (15) im Abstand zur Zylinderkopf-Zylinder-Trennebene (2) erstreckt.

5. Zylinderkopf nach einem der Ansprüche 1 bis 4,
— für eine Reihen-Brennkraftmaschine mit Ventilsteuerung durch eine einzige tunnelgelagerte Nockenwelle (25) und durch einander entgegengerichtete, auf verstellbaren Kugelstützlagern (27) geführte Schlepphebel (26),
dadurch gekennzeichnet,
— daß die Öffnungsquerschnitte in Ein- und Auslaßventile (5 und 6) den Rand des Brennraumes (10) eng tangieren,
— wobei der V-Winkel (7) etwa 14° und der Schwenk-Winkel (13) etwa 3° beträgt.

6. Zylinderkopf nach Anspruch 5, dadurch gekennzeichnet,
daß im vom V-Winkel (7) bestimmten V-Winkelraum (7') zwischen den Schäften der Ein- und Auslaßventile (5 und 6) ein in Richtung der Brennraumreihe hinterschneidungsfrei durchgehender Kühlkanal (23) angeordnet ist.

7. Zylinderkopf für Reihen-Brennkraftmaschinen, nach einem der Ansprüche 1 bis 6, dadurch gekennzeichnet,
— daß die Einlaßkanäle (19) mit den -Ventilen (5) jeweils einen Winkel (20) im Bereich von 40 bis 60° und die Auslaßkanäle (21) mit den -Ventilen (6) jeweils einen Winkel (22) im Bereich von 80° einschließen und
— daß im Winkel-Raum (28) zwischen den Einlaßkanälen (5) und der Zylinderkopf-Zylinder-Trennebene (2) Kraftstoff-Einspritzventile (29), Hilfseinlaß- und/oder Abgasrückführ-Kanäle (30) angeordnet sind.

**Claims**

1. A cylinder head (1) for an externally-ignited 4-stroke internal combustion engine,
— having a combustion chamber (10) formed predominantly as a concave, shallow recess,
— with an inlet valve (5) and an exhaust valve (6) for each combustion chamber (10), the stems of which valves are arranged in parallel transverse planes,
— the stems forming a V-angle (7) in the range of 10 to 20° in the perpendicular projection to the transverse planes, and
— having a spark plug (12) the spark gap (11) of which is arranged close to or in the transverse plane of the inlet valve (5) in the direction of inflow of the charge sucked into the combustion chamber (10) and close to or in the said projection of the exhaust valve stem,
characterised in that
— the angle between the inlet valve stem and

4

associated cylinder axis in the said projection is, in each case, in the range of 2 to 10° greater than the corresponding angle with the exhaust valve stem,

— that a higher region of the recess, extending in each case as far as the associated cylinder margin, contains the exhaust valve (6) and the spark gap (11), and

— that a gradually narrowing region of the recess, closely adjoining the said higher region, contains the inlet valve (5) and falls off to the plane of separation of the cylinder head and cylinder.

2. A cylinder head according to claim 1, characterised in that
the line (17) of connection of the centre points (5' and 6') of the opening cross-sections of the inlet and exhaust valves (5 and 6) includes, with the transverse planes (8 and 9), an angle (18) in the range of 30 to 50°.

3. A cylinder head according to claim 2, characterised
in that the spark gap (11) of the spark plug (12) in the said projection of the transverse planes (8 and 9) lies closer to the middle point (5') of the opening cross-section of the inlet valve (5) than does the centre point (6') of the opening cross-section of the exhaust valve (6).

4. A cylinder head according to one of claims 1 to 3,
— wherein the longitudinal axis of the spark plug (12) is arranged at an angle (12') in the range of 40 to 50° to the longitudinal axis (13') of the cylinder,
characterised in that
— the combustion chamber wall (10) has, in the region of the spark plug (12), an inwardly-protruding bead (16)
— which extends closely from the edge of the combustion chamber wall (10) to the combustion chamber end of the spark plug thread (15) at a distance from the plane (2) of separation of the cylinder head and cylinder.

5. A cylinder head according to one of claims 1 to 4,
— for an in-line internal combustion engine with valve control effected by a single tunnel-mounted cam shaft (25) and by mutually oppositely-directed drag levers (26) guided on adjustable ball thrust bearings (27),
characterised in that
— the opening cross-sections of the inlet and exhaust valves (5 and 6) are closely tangential to the edge of the combustion chamber (10),
— with the V-angle (7) amounting to about 14° and the pivot angle (13) amounting to about 3°.

6. A cylinder head according to claim 5, characterised in
that a through cooling passage (23) extending without undercut in the direction of the row of combustion chambers is arranged in the V-angle space (7') determined by the V-angle (7) between the stems of the inlet and exhaust valves (5 and 6).

7. A cylinder head for in-line internal combustion engines according to one of claims 1 to 6, characterised in that
— the inlet passages (10) make, in each case, an angle in the range of 40 to 60° with the inlet valves while the exhaust passages (21) make, in each case, an angle in the region of 80° with the exhaust valves (6), and
— that fuel injection valves (29) and auxiliary inlet and/or exhaust gas return passages (30) are arranged in the angle space (28) between the inlet passages (5) and the plane (2) of separation of the cylinder head and cylinder.

**Revendications**

1. Culasse (1) pour un moteur à combustion interne à quatre temps, à allumage hétérogène, avec une chambre de combustion (10) réalisée principalement sous forme de cavité concave plate,
— avec une soupape d'admission et une soupape d'échappement, respectives par chambre de combustion (10), soupapes dont les tiges sont situées dans des plans transversaux parallèles,
— dans la projection perpendiculaire sur les plans transversaux, les tiges font un angle V (7) compris entre 10 et 20° et,
— une bougie d'allumage (12) dont le chemin d'allumage (11) se trouve au voisinage ou dans le plan transversal de la soupape d'admission (5), dans la direction de la pénétration du mélange aspiré dans la chambre de combustion (10) et au voisinage ou dans ladite projection de l'axe de la soupape d'échappement,
caractérisée en ce que :
— dans la projection ci-dessus, l'angle entre la tige de la soupape d'admission et l'axe du cylindre correspondant est supérieur à l'angle correspondant avec la soupape d'échappement, dans une plage de 2 à 10°,
— en ce qu'une zone plus haute de la cavité, s'étendant jusqu'au bord du cylindre correspondant, reçoit la soupape d'échappement (6) et le chemin d'allumage (11) et
— une zone de la cavité allant en se rétrécissant progressivement, lisse, adjacente, comporte la soupape d'admission (5) et diminue jusqu'au plan de séparation entre la culasse et le cylindre.

2. Culasse selon la revendication 1, caractérisée en ce que la ligne de liaison (17) des centres (5' et 6') des sections des ouvertures des soupapes d'admission et d'échappement (5 et 6) fait avec les plans transversaux (8 et 9) un angle (18) compris dans une plage de 30 à 50°.

3. Culasse selon la revendication 2, caractérisée en ce que le chemin d'allumage (11) de la bougie (12) pour la projection dans les plans transversaux (8 et 9) est plus proche du centre (5') de la section d'ouverture de la soupape d'admission (5) que le centre (6') de la section d'ouverture de la soupape d'échappement (6).

4. Culasse selon l'une des revendications 1 à 3,
— dans laquelle l'axe longitudinal de la bougie (12) fait avec l'axe (13') du cylindre un angle (12') compris entre 40 et 50°,
caractérisée en ce que :

— la paroi de la chambre de combustion (10) présente un bourrelet (16) en saillie vers l'intérieur dans la zone de la bougie d'allumage (12),

— bourrelet qui s'étend du voisinage du bord de la chambre de combustion (10) jusqu'à l'extrémité du filetage (15) de la bougie, située du côté de la chambre de combustion, avec une certaine distance par rapport au plan de séparation (2) entre la culasse et le cylindre.

5. Culasse selon l'une des revendications 1 à 4,

— pour un moteur à combustion interne en ligne avec commande des soupapes par un seul arbre à came (25) monté en tunnel et des culbuteurs (26) opposés, est guidé sur des appuis à rotule (27) réglables,
caractérisée en ce que :

— les sections des ouvertures des soupapes d'admission et d'échappement (5 et 6) sont étroitement tangentes au bord de la chambre de combustion (10),

— l'angle V (7) est de l'ordre de 14° et l'angle de basculement (13) d'environ 3°.

6. Culasse selon la revendication 5, caractérisée en ce que dans le dièdre (7') défini par l'angle V (7), entre les axes des soupapes d'admission et d'échappement (5 et 6), est prévu un canal de refroidissement (23), traversant, sans contre-dépouille, en direction de l'alignement des chambres de combustion.

7. Culasse pour des moteurs à combustion en ligne selon l'une des revendications 1 à 6, caractérisée en ce que :

— les canaux d'admission (19) font avec les soupapes d'admission (5) un angle respectif (20) compris entre 40 et 60° et les canaux d'échappement (21) font avec les soupapes d'échappement (6) un angle respectif (22) de l'ordre de 80° et,

— dans le dièdre (28) entre les canaux d'admission (5) et le plan de séparation (2) culasse-cylindres se trouvent les injecteurs de carburant (29), les canaux d'admission auxiliaires et/ou les canaux de retour de gaz d'échappement (30).

Fig. 1

Fig. 2

0 101 969

1

Fig. 3